# EUROPEAN PATENT SPECIFICATION

(11) **EP 3 531 505 B1**
(45) Date of publication and mention of the grant of the patent: **07.10.2020**
(21) Application number: 16923146.1
(22) Date of filing: 05.12.2016
(51) Int. Cl.: H01Q 3/24, H04W 16/28

(54) **BEAM TRACKING APPARATUS AND METHOD, AND ANTENNA SYSTEM**
VORRICHTUNG UND VERFAHREN ZUR STRAHLVERFOLGUNG UND ANTENNENSYSTEM
APPAREIL ET PROCÉDÉ DE SUIVI DE FAISCEAUX, ET SYSTÈME D'ANTENNES

(43) Date of publication of application: 28.08.2019
(73) Proprietor: Huawei Technologies Co., Ltd., Longgang District Shenzhen, Guangdong 518129 (CN)
(72) Inventor: LUO, Yanxing, Shenzhen Guangdong 518129 (CN); LONG, Hao, Shenzhen Guangdong 518129 (CN); TANG, Fusheng, Shenzhen Guangdong 518129 (CN); ZENG, Zhuo, Shenzhen Guangdong 518129 (CN)
(74) Representative: Pfenning, Meinig & Partner mbB
(86) International application number: PCT/CN2016/108609
(87) International publication number: WO 2018/102971

(56) References cited:
- WO-A1-2016/023206
- CN-A- 1 909 401
- CN-A- 101 765 127
- CN-A- 102 684 760
- CN-A- 104 049 252
- CN-A- 104 049 252
- CN-A- 104 052 700
- CN-A- 104 103 910
- CN-A- 104 917 542
- CN-A- 104 917 542
- US-A1- 2006 066 474
- US-A1- 2008 291 083
- HOOD B N ET AL: "Estimating DoA From Radio-Frequency RSSI Measurements Using an Actuated Reflector", IEEE SENSORS JOURNAL, IEEE SERVICE CENTER, NEW YORK, NY, US, vol. 11, no. 2, 2 February 2011 (2011-02-02), pages 413-417, XP011342456, ISSN: 1530-437X, DOI: 10.1109/JSEN.2010.2070872

## Description

### TECHNICAL FIELD

This application relates to the communications field, and in particular, to a beam tracking apparatus and method, and an antenna system.

### BACKGROUND

In long-distance microwave communication, a high-gain antenna is usually used to ensure network performance. However, installation and alignment of a high-gain antenna in engineering are very time-consuming and labor-intensive, and a service is easily interrupted in a blustery environment due to a tower shake. Therefore, the antenna is required to be capable of automatically determining a direction of arrival (English: Direction of Arrival, DOA) to perform automatic beam tracking, so as to facilitate installation and alignment, and resist a shake caused by a wind.

Beam scanning is usually implemented by using an array antenna. However, in an application scenario of long-distance microwave communication, because the array antenna uses a plurality of channels, total costs and power consumption of the antenna are excessively high, and it is difficult for the array antenna to meet an antenna template. Currently, the antenna is designed by using a paraboloid and a radio frequency switch switching-based feed array connected to a channel, to implement a compromise between costs and performance, so as to overcome a defect caused by the array antenna.

In the antenna designed by using a paraboloid and a radio frequency switch switching-based feed array connected to a channel, a direction of arrival is determined in a manner of periodic probe, to implement beam tracking. To be specific, signal strength, in beam directions, corresponding to all working statuses of the feed array is detected by polling in an idle time slice, a direction in which signal strength is high is considered to be a direction of arrival, and mode tracking is performed in the direction of arrival. Because the feed array includes a relatively large quantity of feeds, and the working statuses of the feed array are different combinations of the feeds included in the feed array, a quantity of working statuses is larger, resulting in much time consumption and slow detection in a direction of arrival determining process. Consequently, much time is spent in beam tracking, causing inconvenience in engineering use. In addition, periodic probe causes a large quantity of polling overheads and occupies a large quantity of antenna resources. WO2016/023206 A1 proposes a beam alignment method which comprises: a switching control module which instructs a feed source switching module to enable each feed source in a multi-feed-source antenna, allowing the feed sources to respectively test signal quality. The switching control module obtains a result of the signal quality test conducted by each feed source; and selects a feed source having the best signal quality as a working feed source according to the signal quality test result. CN 104 917 542 A discusses a radio frequency transmit-receive system, and CN 104 049 252 A provides a method for multichannel dynamic grouping switching of multi-beam parabolic antennas.

### SUMMARY

Embodiments of this application provide a beam tracking apparatus and method, and an antenna system according to the independent claims, to resolve a problem that beam tracking consumes a long time and occupies resources. In the following, aspects and embodiments not falling within the scope of the claims should be understood as examples useful to understand the invention.

To achieve the foregoing objective, the following technical solutions are used in the embodiments of this application:

According to a first aspect of this application, a beam tracking apparatus is provided, where the apparatus includes N probe points, a detector connected to the N probe points, and a processor connected to the detector, and N is greater than 1. The detector is configured to: detect received signal strength at N preset locations in an antenna by using the N probe points, and send N detected received signal strength values to the processor. The processor is configured to switch a working status of the antenna according to a preset switching rule and based on a strength relationship among the N received signal strength values sent by the detector, to perform beam tracking, where the preset switching rule includes a correspondence between a working status of the antenna and a strength relationship among the received signal strength values at the N preset locations, and the working status is a connection relationship between a channel and a feed in the antenna. The beam tracking apparatus further includes a single-pole N-throw switch, wherein a non-movable end of the single-pole N-throw switch is connected to the detector, and movable ends of the single-pole N-throw switch are connected to the N probe points. In this architecture, the detector is specifically configured to: successively turn on the N probe points by turning on the single-pole N-throw switch, and detect the received signal strength at the N preset locations in the antenna. In other words, the received signal strength at the N preset locations in the antenna is successively detected. In this architecture, only one detector is required in the beam tracking apparatus provided in this application, and therefore, costs are greatly reduced.

The beam tracking apparatus provided in this application detects the received signal strength at the N preset locations by using the disposed probe points, and then implements beam tracking according to the preset switching rule and based on the strength relationship among the N detected received signal strength values. To be specific, beam tracking is performed by using the beam tracking apparatus provided in this application, and only the signal strength at the preset locations needs to be detected to implement accurate beam tracking. Because detection of the signal strength at the preset locations is easy to implement, consumes a short time, and does not need to occupy a large quantity of antenna resources, fast antenna beam tracking that occupies a small quantity of resources is implemented by using the beam tracking apparatus provided in this application.

With reference to the first aspect, in a possible implementation, the antenna may include an antenna using a paraboloid and a switch switching-based feed array. The antenna using a paraboloid and a switch switching-based feed array includes M channels, M single-pole multi-throw switches, and a feed array. The M channels are respectively connected to non-movable ends of the M single-pole multi-throw switches, movable ends of the M single-pole multi-throw switches are used to select different feed array groups in the feed array, and M is greater than 1.

With reference to any one of the first aspect or the foregoing possible implementation, in a possible implementation, the N preset locations may be N channels in the antenna.

With reference to any one of the first aspect or the foregoing possible implementations, in another possible implementation, the N preset locations may be N different locations in the feed array included in the antenna. When the antenna is the antenna using a paraboloid and a switch switching-based feed array, and the N preset locations are N different locations in the feed array in the antenna using a paraboloid and a switch switching-based feed array, if the feed array is distributed in a quadrilateral manner, N is 4, and the N preset locations are respectively distributed on four edges of the feed array, or the N preset locations include four vertices of the feed array. The preset locations are deployed around the feed array, to accurately detect the received signal strength in the feed array, thereby implementing accurate beam tracking.

With reference to any one of the first aspect or the foregoing possible implementations, in another possible implementation, the detector is specifically configured to: detect the received signal strength at the N preset locations by using the N probe points when the antenna using a paraboloid and a switch switching-based feed array is in a specific working state, and send the N detected received signal strength values to the processor. The specific working state includes that a channel in the antenna using a paraboloid and a switch switching-based feed array is connected to a peripheral feed in the feed array. In the specific working state, the signal strength detected by using the probe points is more identifiable, and the strength relationship among the N obtained received signal strength values is more obvious and more identifiable, so that beam tracking is more accurate.

With reference to any one of the first aspect or the foregoing possible implementations, in another possible implementation, the specific working state may include that the N channels in the antenna using a paraboloid and a switch switching-based feed array are connected to feeds on the four edges of the feed array by using N single-pole multi-throw switches. When the N channels are connected to the feeds on the four edges of the feed array by using the N single-pole multi-throw switches, an offset angle of a paraboloid is the largest, and a beam scanning range is the widest, so that the signal strength detected by using the probe points is more identifiable.

(deleted)

With reference to any one of the first aspect or the foregoing possible implementations, in another possible implementation, the beam tracking apparatus provided in this application includes N detectors, which are respectively connected to the N probe points. In this architecture, the N detectors are specifically configured to detect the received signal strength at the N preset locations in the antenna by using the probe points respectively connected to the N detectors. In other words, the received signal strength at the N preset locations in the antenna is simultaneously detected. In this architecture, a quantity of detectors in the beam tracking apparatus provided in this application is the same as a quantity of probe points. Although costs increase, a time consumed in a detection process is shortened. This is equivalent to increasing a beam tracking speed. Therefore, beam tracking duration is further shortened.

With reference to any one of the first aspect or the foregoing possible implementations, in another possible implementation, the strength relationship may include a difference or a ratio. Any measurement manner that can be used to reflect a strength relationship among signal strength can be used to represent the strength relationship. This is not specifically limited in this application.

With reference to any one of the first aspect or the foregoing possible implementations, in another possible implementation, the processor may be further configured to determine, according to the preset switching rule and based on the strength relationship among the N received signal strength values sent by the detector, a direction of arrival of signals received by the antenna using a paraboloid and a switch switching-based feed array, where the preset switching rule includes a correspondence between a direction of arrival and a strength relationship among the received signal strength values. The direction of arrival is determined in a fast manner in which no resource is occupied.

According to a second aspect of this application, a beam tracking method is provided, and the method may include: detecting received signal strength at N preset locations in an antenna, where N is greater than 1; and switching a working status of the antenna according to a preset switching rule and based on a strength relationship among N detected received signal strength values, to perform beam tracking, where the preset switching rule includes a correspondence between a working status of the antenna and a strength relationship among the received signal strength values at the N preset locations, and the working status is a connection relationship between a channel and a feed in the antenna. The method further comprises successively turning on the N probe points by turning on a single-pole N-throw switch, and detecting the received signal strength at the N preset locations in the antenna wherein the single-pole N-throw switch has a non-movable end connected to the detector, and movable ends connected to the N probe points.

Principles of the beam tracking method provided in the second aspect are the same as those of the beam tracking apparatus provided in the first aspect. Therefore, the beam tracking method provided in the second aspect can achieve the same beneficial effects as those in the first aspect. Details are not described herein again.

It should be noted that, for specific implementations of the beam tracking method provided in the second aspect, refer to the specific implementations of the beam tracking apparatus provided in the first aspect, and details are not described herein again.

According to a third aspect, this application provides another beam tracking apparatus, where the beam tracking apparatus may implement a function in the foregoing method example, and the function may be implemented by using hardware, or may be implemented by hardware by executing corresponding software. The hardware or the software includes one or more modules corresponding to the foregoing function.

With reference to the third aspect, in a possible implementation, a structure of the beam tracking apparatus includes a processor and a transceiver. The processor is configured to support the beam tracking apparatus in performing the corresponding function in the foregoing method. The transceiver is configured to support the beam tracking apparatus in communicating with another device. The beam tracking apparatus may further include a memory. The memory is configured to be coupled to the processor, and the memory stores a program instruction and data that are necessary for the beam tracking apparatus.

According to a fourth aspect, this application provides a computer storage medium, configured to store a computer software instruction used by the foregoing beam tracking apparatus. The computer storage medium includes a program designed to perform the foregoing aspects.

According to a fifth aspect, this application further provides an antenna system, where the antenna system may include the beam tracking apparatus described in any one of the foregoing aspects or possible implementations.

Principles of solutions provided in the third aspect and the fifth aspect are the same as those of the beam tracking apparatus provided in the first aspect. Therefore, the solutions provided in the third aspect and the fifth aspect can achieve the same beneficial effects as those in the first aspect. Details are not described herein again.

### BRIEF DESCRIPTION OF DRAWINGS

FIG. 1 is a schematic architectural diagram of an antenna using a paraboloid and a switch switching-based feed array according to an embodiment of this application;
FIG. 2 is a schematic cross-sectional diagram of a feed array in an antenna using a paraboloid and a switch switching-based feed array according to an embodiment of this application;
FIG. 3 is a schematic structural diagram of a beam tracking apparatus according to an embodiment of this application;
FIG. 3A is a schematic diagram of distribution of preset locations according to an embodiment of this application;
FIG. 3B is a schematic diagram of another type of distribution of preset locations according to an embodiment of this application;
FIG. 4 is a schematic structural diagram of another beam tracking apparatus according to an embodiment of this application;
FIG. 5 is a schematic structural diagram of still another beam tracking apparatus according to an embodiment of this application;
FIG. 6 is a schematic diagram of still another type of distribution of preset locations according to an embodiment of this application;
FIG. 7 is a schematic architectural diagram of another antenna using a paraboloid and a switch switching-based feed array according to an embodiment of this application;
FIG. 8 is a schematic structural diagram of still another beam tracking apparatus according to an embodiment of this application;
FIG. 9 is a schematic structural diagram of still another beam tracking apparatus according to an embodiment of this application;
FIG. 10 is a schematic flowchart of a beam tracking method according to an embodiment of this application;
FIG. 11 is a schematic flowchart of another beam tracking method according to an embodiment of this application; and
FIG. 12 is a schematic structural diagram of an antenna system according to an embodiment of this application.

### DESCRIPTION OF EMBODIMENTS

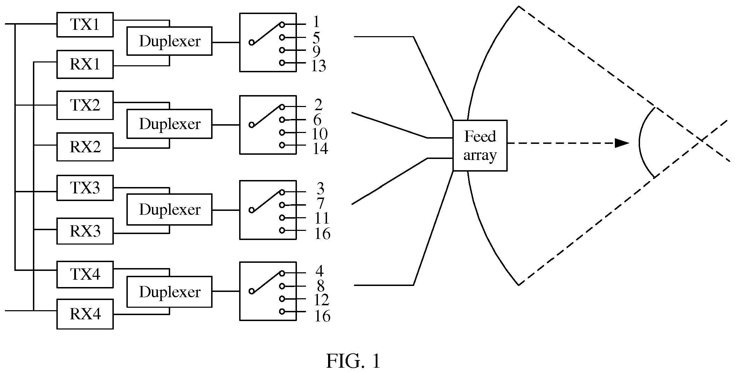

Currently, to achieve a compromise between costs and performance of an array antenna, a manner in which a paraboloid and a radio frequency switch switching-based feed array connected to a channel are used is proposed in the industry to design the antenna (referred to as an antenna using a paraboloid and a switch switching-based feed array in this specification). An architecture of the antenna using a paraboloid and a switch switching-based feed array is shown in FIG. 1. The architecture of the antenna using a paraboloid and a switch switching-based feed array is described below with reference to FIG. 1.

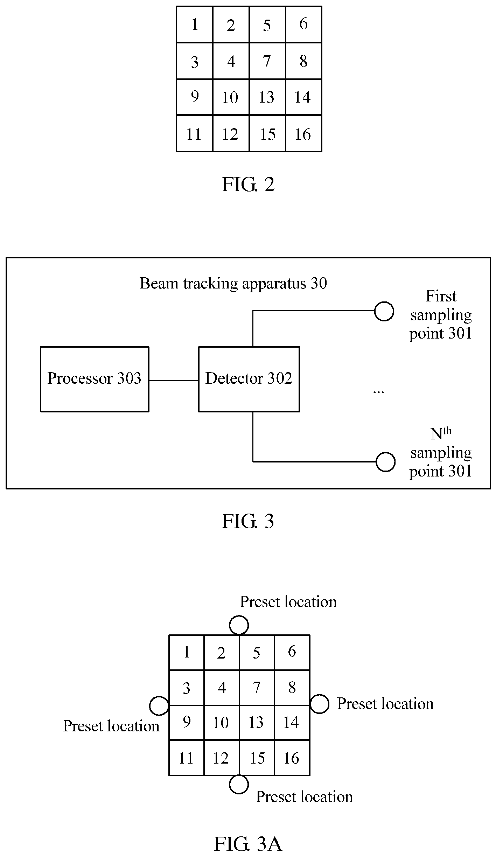

As shown in FIG. 1, the antenna using a paraboloid and a switch switching-based feed array includes at least one paraboloid (FIG. 1 shows two paraboloids), a feed array including M feeds (FIG. 1 shows that M=16), X channels (FIG. 1 shows four channels), and X single-pole multi-throw switches used to map and connect the channels to the feed array, where M is greater than 1. A distribution cross-section of the feed array is shown in FIG. 2.

Each channel includes a duplexer, an uplink channel (TX), and a downlink channel (RX). TXs of the four channels are respectively recorded as a TX1, a TX2, a TX3, and a TX4; and RXs of the four channels are respectively recorded as an RX1, an RX2, an RX3, and an RX4.

It should be noted that a value of X, a value of M, and a quantity of paraboloids may be configured based on an actual requirement. This is not specifically limited in this embodiment of this application. FIG. 1 shows only an example, and is not intended to specifically limit the value of X, the value of M, and the quantity of paraboloids.

N channels in the antenna using a paraboloid and a switch switching-based feed array select different feed groups from the feed array by using single-pole multi-throw switches connected to the N channels. This is equivalent to that different offset angles of a parabolic antenna are obtained and beam scanning is performed.

It should be noted that a mapping connection correspondence between the N channels and the feed groups in the feed array may be configured based on an actual requirement. This is not specifically limited in this embodiment of this application.

For example, 16 feeds included in the feed array in the antenna using a paraboloid and a switch switching-based feed array that is shown in FIG. 1 are recorded as a feed 1 to a feed 16. It is assumed that a channel 1 is connected to any one of feeds 1, 5, 9, and 13 by turning on a switch 1, a channel 2 is connected to any one of feeds 2, 6, 10, and 14 by turning on a switch 2, a channel 3 is connected to any one of feeds 3, 7, 11, and 15 by turning on a switch 3, and a channel 4 is connected to any one of feeds 4, 8, 12, and 16 by turning on a switch 4.

In the antenna using a paraboloid and a switch switching-based feed array, a working status is a mapping connection relationship between a channel and a feed in the feed array, to be specific, a connection relationship between a channel and a single-pole multi-throw switch connected to the channel. For another type of antenna, a working status of the antenna is a connection relationship between a channel and a feed in the antenna, and a manner for connection between the channel and the feed is not specifically limited in this application.

For example, FIG. 1 shows that the channel 1 to the channel 4 are connected to the feed 1, the feed 2, the feed 3, and the feed 4 by turning on the switches 1 to 4. In this case, FIG. 1 shows that a working status of the antenna is that the channels are connected to the feeds 1, 2, 3, and 4. When a location at which a single-pole multi-throw switch is turned on in FIG. 1 changes, the working status of the antenna is switched. For example, if the channel 1 to the channel 4 shown in FIG. 1 are connected, through switching, to the feed 5, the feed 10, the feed 11, and the feed 16 by turning on the switches 1 to 4, the working status of the antenna is also accordingly switched to a working status that the channels are connected to the feeds 5, 10, 11, and 16. Other cases are not enumerated.

Therefore, beam tracking is adjusting a working status of an antenna, to enable the working status of the antenna to match a direction of arrival of a received signal, so as to exert optimal performance of the antenna. The antenna using a paraboloid and a switch switching-based feed array that is shown in FIG. 1 has many working statuses, which are determined by permutations and combinations of X and M. If a direction of arrival is determined in an existing manner of periodic probe, and beam tracking is performed after the direction of arrival is determined in a polling manner, an extremely long time is consumed.

Based on this, basic principles of this application are: presetting a preset switching rule including a correspondence between a working status of an antenna and a strength relationship among received signal strength values; disposing N probe points at N preset locations in the antenna; detecting received signal strength at the preset locations; and switching the working status of the antenna after learning, based on a detection result and according to the preset switching rule, of a working status corresponding to a received signal, so as to perform beam tracking. Because a signal strength detection process consumes a short time and occupies a small quantity of resources, fast beam tracking that occupies a small quantity of resources can be implemented.

The following describes in detail the embodiments of this application with reference to accompanying drawings.

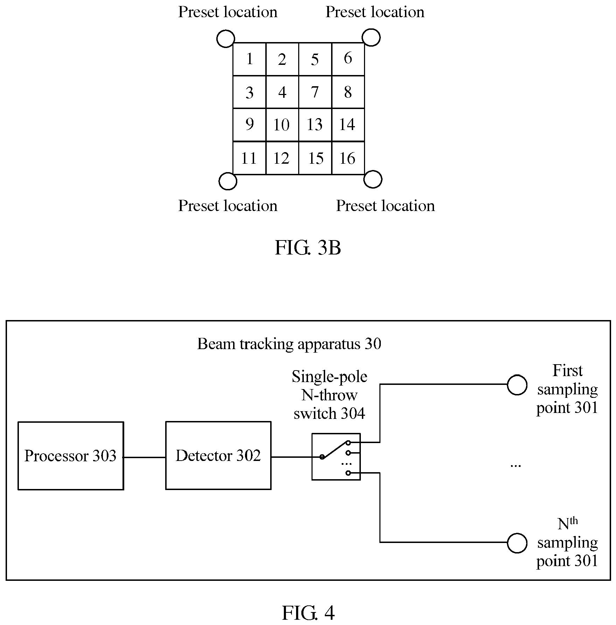

According to one aspect, an embodiment of this application provides a beam tracking apparatus 30. FIG. 3 is a schematic structural diagram of the beam tracking apparatus 30 according to this embodiment of this application.

Optionally, the beam tracking apparatus 30 may be configured to perform beam tracking on the antenna using a paraboloid and a switch switching-based feed array that is shown in FIG. 1. Certainly, the beam tracking apparatus 30 may also be configured to perform beam tracking on another type of antenna. This is not specifically limited in this embodiment of this application.

As shown in FIG. 3, the beam tracking apparatus 30 may include N probe points 301, a detector 302 connected to the N probe points 301, and a processor 303 connected to the detector 302.

Each constituent component of the beam tracking apparatus 30 is described below in detail with reference to FIG. 3.

The probe point 301 may be a device for obtaining a sampled signal, for example, a sampling resistor or a coupler, and is configured to obtain a signal at a preset location through sampling. Any device that can be configured to sample a signal can be used as the probe point 301. A type of the probe point 301 is not specifically limited in this application. The probe points 301 may be distributed near N preset locations in the antenna to obtain received signals at the preset locations through coupling, or may be connected to N preset locations in the antenna. This is not specifically limited in this application.

Specific locations of the N preset locations in the antenna may be configured based on an actual requirement. This is not specifically limited in this embodiment of this application.

Optionally, the N preset locations may be N channels in the antenna. Alternatively, the N preset locations may be locations other than channels in the antenna.

It should be noted that, in actual application, specific content of the N preset locations may be set based on an actual requirement. This is not specifically limited in this embodiment of this application. Any location that is in the antenna and that can be used to perform beam tracking by detecting received signal strength can be used as the preset location.

Optionally, the N preset locations may be N different locations in a feed array in the antenna using a paraboloid and a switch switching-based feed array.

Further, when the N preset locations are the N different locations in the feed array in the antenna using a paraboloid and a switch switching-based feed array, if the feed array is distributed in a quadrilateral manner (as shown in FIG. 2), N is 4.

Optionally, when the N preset locations are the N different locations in the feed array in the antenna using a paraboloid and a switch switching-based feed array, and the feed array is distributed in a quadrilateral manner, the N preset locations include four edges of the feed array, or the N preset locations include four vertices of the feed array.

FIG. 3A shows a distribution example in which four preset locations are on four edges of a feed array. FIG. 3B shows a distribution example in which four preset locations are on vertices of a feed array.

It should be noted that, FIG. 3A and FIG. 3B show only distribution examples of the N preset locations when the feed array is distributed in a quadrilateral manner, and are not a specific limitation thereof.

Further, when the N preset locations include the four edges of the feed array, a specific location of each preset location on each edge of the feed array may be set based on an actual requirement. This is not specifically limited in this embodiment of this application.

The detector 302 detects received signal strength at the N preset locations in the antenna by using the N probe points 301, and sends N detected received signal strength values to the processor 303. The detector 302 may be a detector tube, a detector circuit, or the like. Any device that can detect strength of a signal obtained by a probe point 301 at a preset location can be used as the detector 302.

Further, optionally, the detector 302 may be specifically configured to: detect the received signal strength at the N preset locations by using the N probe points 301 when the antenna using a paraboloid and a switch switching-based feed array is in a specific working state, and send the N detected received signal strength values to the processor 303.

The specific working state includes that a channel in the antenna using a paraboloid and a switch switching-based feed array is connected to a peripheral feed in the feed array. Specifically, a connection relationship between the channel and the feed in the specific working state may be set based on an actual requirement. This is not specifically limited in this embodiment of this application. When the antenna is in the specific working state, the received signal strength at the N preset locations that is detected by the detector 302 by using the N probe points 301 is more identifiable.

For example, the specific working state of the antenna using a paraboloid and a switch switching-based feed array may include that the channel is connected to a feed, which is the peripheral feed in the feed array. For example, the specific working state of the antenna using a paraboloid and a switch switching-based feed array that is shown in FIG. 1 may include: the four channels are respectively mapped and connected to the feeds 1, 6, 11, and 16, the four channels are respectively mapped and connected to the feeds 3, 5, 12, and 14, or the like. Details are not described herein.

Specifically, in the beam tracking apparatus 30, there may be a plurality of solutions for a quantity of detectors 302. This is not specifically limited in this application.

Optionally, in the beam tracking apparatus 30, there may be only one detector 302, and the detector 302 has a plurality of channels, and can process N input signals in parallel, to obtain received strength values of the N signals. When there is one detector 302 and the detector 302 is directly connected to the probe points 301, a structure of the beam tracking apparatus 30 is shown in FIG. 1.

Optionally, in the beam tracking apparatus 30, there may be one detector 302, and the detector 302 can process one input signal. The detector 302 is successively connected to the N probe points 301 by using a single-pole N-throw switch 304, and successively processes signals obtained by all the probe points 301, so as to successively obtain received strength values of the N signals. A non-movable end of the single-pole N-throw switch 304 is connected to the detector 302, and movable ends of the single-pole N-throw switch 304 are connected to the N probe points 301. When there is one detector 302 and the detector 302 is connected to the probe points 301 by using the single-pole N-throw switch 304, a structure of the beam tracking apparatus 30 is shown in FIG. 4.

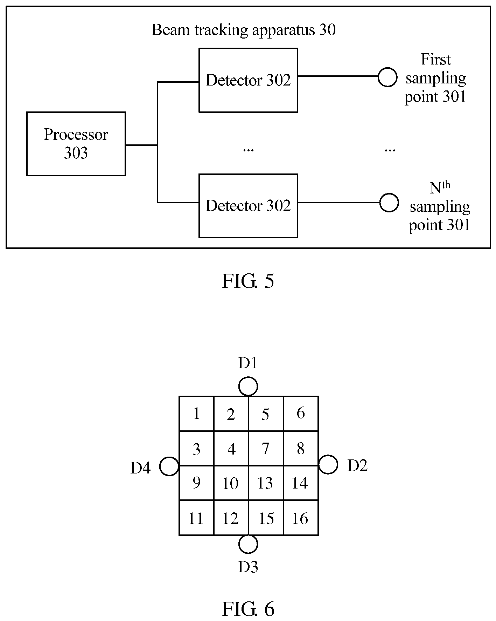

Optionally, in the beam tracking apparatus 30, there may be N detectors 302, each detector 302 can process one input signal, and the N detectors 302 can obtain received strength values of N signals. When there are N detectors 302, a structure of the beam tracking apparatus 30 is shown in FIG. 5.

The processor 303 is a control center of the beam tracking apparatus 30, and may be a central processing unit (English: central processing unit, CPU), an application-specific integrated circuit (English: Application-Specific Integrated Circuit, ASIC), or one or more integrated circuits configured to implement this embodiment of this application, for example, one or more microprocessors (English: digital signal processor, DSP) or one or more field programmable gate arrays (English: Field Programmable Gate Array, FPGA). The processor 303 may perform various functions of the beam tracking apparatus 30 by running or executing a software program and/or a module, and invoking data.

Specifically, the processor 303 is configured to switch a working status of the antenna according to a preset switching rule and based on a strength relationship among the N received signal strength values sent by the detector 302, to perform beam tracking.

Further, switching a working status of the antenna according to a preset switching rule and based on a strength relationship among the N received signal strength values sent by the detector 302, to perform beam tracking includes: switching the working status of the antenna to a working status that is in the preset switching rule and that corresponds to the strength relationship among the N received signal strength values sent by the detector 302, to complete beam tracking.

Optionally, the strength relationship includes a difference or a ratio. For example, it is assumed that N=4, and received signal strength values at four preset locations are respectively recorded as D1, D2, D3, and D4. A strength relationship among the received signal strength values may include that D1 is higher than D3 by a first preset threshold in power, and D2 is higher than D4 by a second preset threshold in power. Alternatively, a strength relationship among the received signal strength values may include that a power ratio of D1 to D3 is greater than a first ratio, and a power ratio of D2 to D4 is greater than a second ratio.

It should be noted that the foregoing example is merely an example for description of the strength relationship, and is not a specific limitation on the strength relationship. Specific values of the first preset threshold, the second preset threshold, the first ratio, and the second ratio may all be set based on an actual requirement. This is not specifically limited in this embodiment of this application.

The preset switching rule includes a correspondence between a working status of the antenna and a strength relationship among the received signal strength values at the N preset locations.

Optionally, the correspondence that is included in the preset switching rule and that is between a working status of the antenna and a strength relationship among the received signal strength values at the N preset locations may be obtained by performing performance simulation on the antenna. For example, that the antenna receives different beam signals in actual application is simulated in an enumeration manner, antenna statuses for implementing beam tracking in cases of the different beam signals are recorded, and strength relationships among received signal strength at the N preset locations of the antenna in the cases of the different beam signals are tested and recorded. The preset switching rule is established based on the recorded antenna statuses for implementing beam tracking in the cases of the different beam signals, and the recorded strength relationships among the received signal strength values at the N preset locations of the antenna in the cases of the different beam signals.

Optionally, the correspondence that is included in the preset switching rule and that is between a working status of the antenna and a strength relationship among the received signal strength values at the N preset locations may alternatively be obtained based on a location relationship among the N preset locations. Specifically, a direction of arrival of signals received by the antenna may be determined based on the location relationship among the N preset locations and the strength relationship among the received signal strength values at the N preset locations. One direction of arrival uniquely corresponds to one working status, so that the correspondence in the preset switching rule can be obtained. The preset switching rule may be obtained in an enumeration manner.

For example, it is assumed that the antenna is an antenna using a paraboloid and a switch switching-based feed array, N=4, four preset locations are shown in FIG. 6, and received signal strength values at the four preset locations are respectively recorded as D1, D2, D3, and D4. When the received signal strength values D1, D2, D3, and D4 are close to each other in power, it is determined that a direction of arrival of the signals is perpendicular to the feed array. If a working status corresponding to the direction of arrival is that the four channels are connected to the feeds 4, 7, 10, and 13, a strength relationship that a difference between every two of D1, D2, D3, and D4 is less than or equal to X can be obtained, and a corresponding working status is that the four channels are mapped and connected to the feeds 4, 7, 10, and 13. X is a defined threshold of a power difference. For another example, when D1 is higher than D3 in power, and D2 is higher than D4 in power, it is determined that a direction of arrival of the signals is upper right (a direction between a location of D1 and a location of D2). If a working status corresponding to the direction of arrival is that the four channels are connected to the feeds 5, 6, 7, and 8, a strength relationship that D1 is higher than D3 by a first preset threshold in power and D2 is higher than D4 by a second preset threshold in power can be obtained, and a corresponding working status is that the four channels are mapped and connected to the feeds 5, 6, 7, and 8.

It should be noted that, the foregoing two manners of obtaining the preset switching rule are examples for description, and are not limitations on a process of obtaining the preset switching rule. In actual application, content of the preset switching rule may be determined based on an actual requirement.

For example, Table 1 shows a preset switching rule. For the preset switching rule shown in Table 1, content and a form of the preset switching rule are illustrated by using an example in which N is 4 and the antenna is the antenna using a paraboloid and a switch switching-based feed array that is shown in FIG. 1.

**Table 1**

| Strength relationship | Working status |
|---|---|
| D1 is higher than D3 by a first preset threshold in power, and D2 is higher than D4 by a second preset threshold in power | Four channels are mapped and connected to feeds 5, 6, 7, and 8 |
| A power ratio of D1 to D2 is greater than a first ratio, and a power ratio of D3 to D4 is greater than a second ratio | Four channels are mapped and connected to feeds 4, 7, 10, and 13 |
| Strength relationship 1 | Working status 1 |
| Strength relationship 2 | Working status 2 |

It should be noted that Table 1 provides only example description of the preset switching rule by using an example, and is not a specific limitation on the content and the form of the preset switching rule. In actual application, the preset switching rule may be obtained through simulation, and the form of the preset switching rule may be another form other than the form of a table. This is not specifically limited in this embodiment of this application.

Specifically, a preset strength relationship met by the strength relationship among the N received signal strength values may include a preset strength relationship that is identical to the strength relationship among the N received signal strength values, or may include a preset strength relationship within which the strength relationship among the N received signal strength values falls. This is not specifically limited in this embodiment of this application.

The following uses the antenna using a paraboloid and a switch switching-based feed array that is shown in FIG. 1 and the preset switching rule shown in Table 1 as an example to provide example description of a working process of the beam tracking apparatus 30 provided in this application.

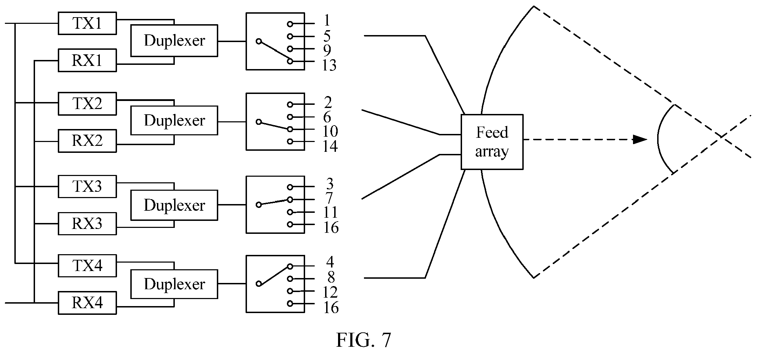

For example, as shown in FIG. 1, it is assumed that a current working status of the antenna is that the four channels shown in the figure are mapped and connected to the feeds 1, 2, 3, and 4. At a specific moment, the beam tracking apparatus 30 detects, by using four probe points, that received signal strength values at four preset locations are respectively recorded as D1, D2, D3, and D4, and a strength relationship among the received signal strength values meets a condition that a power ratio of D1 to D3 is greater than a first ratio and a power ratio of D2 to D4 is greater than a second ratio. Therefore, the beam tracking apparatus 30 switches, according to the preset switching rule shown in Table 1, the working status of the antenna to a working status shown in FIG. 7, to be specific, the four channels are mapped and connected to the feeds 4, 7, 10, and 13.

It should be noted that, the beam tracking apparatus 30 provided in this embodiment of this application may periodically execute a beam tracking process, may execute a beam tracking process at a specific time, or may execute a beam tracking process in an idle time slice. A working moment of the beam tracking apparatus 30 is not specifically limited in this embodiment of this application.

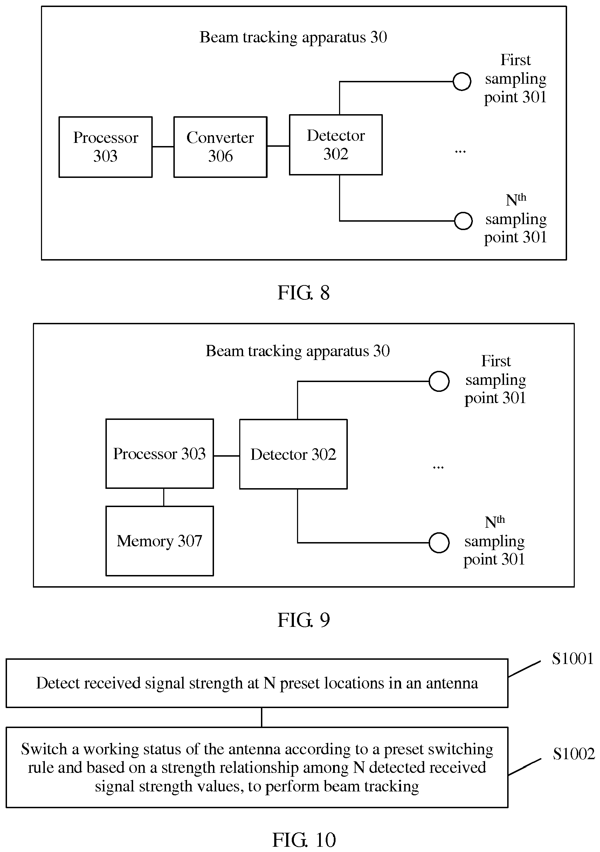

Further, when the processor 303 cannot identify the received strength values that are of N signals and that are obtained by the detector 302, as shown in FIG. 8, the beam tracking apparatus 30 may include a converter 306 configured to connect the detector 302 to the processor 303.

Optionally, the converter 306 may be an analog to digital converter or another converter. A type of the converter 306 is not specifically limited in this application.

It should be noted that FIG. 8 only includes the converter 306 based on FIG. 3. The beam tracking apparatuses 30 shown in FIG. 4 and FIG. 5 may also include the converter 306 based on an actual requirement, and details are not described or illustrated again.

Further, as shown in FIG. 9, the beam tracking apparatus 30 may include a memory 307. The memory 307 may be a volatile memory (English: volatile memory) such as a random-access memory (English: random-access memory, RAM), may be a non-volatile memory (English: non-volatile memory) such as a read-only memory (English: read-only memory, ROM), a flash memory (English: flash memory), a hard disk (English: hard disk drive, HDD), or a solid state drive (English: solid state drive, SSD), or may be a combination of the foregoing types of memories, and is configured to store a related application program and a configuration file for implementing a function of the beam tracking apparatus 30. The processor 303 may perform various functions of the beam tracking apparatus 30 by running or executing a software program and/or a module stored in the memory 307 and invoking data stored in the memory 307.

It should be noted that FIG. 9 only includes the memory 307 based on FIG. 3. The beam tracking apparatuses 30 shown in FIG. 4, FIG. 5, and FIG. 8 may also include the memory 307, and details are not described or illustrated again.

Further, the preset switching rule may include a correspondence between a direction of arrival and a strength relationship among the received signal strength values. The processor 303 may be further specifically configured to determine, according to the preset switching rule and based on the strength relationship among the N received signal strength values sent by the detector 302, a direction of arrival of signals received by the antenna. Specifically, according to the preset switching rule and based on the strength relationship among the N received signal strength values sent by the detector 302, it may be determined that the direction of arrival of the signals received by the antenna is a direction of arrival that is in the preset switching rule and that corresponds to the strength relationship among the N received signal strength values.

The beam tracking apparatus 30 provided in this application detects the received signal strength at the N preset locations by using the disposed probe points, and then performs beam tracking according to the preset switching rule and based on the strength relationship among the N detected received signal strength values. To be specific, automatic beam tracking of the antenna is performed by using the beam tracking apparatus 30 provided in this application, and only the signal strength at the preset locations needs to be detected to implement accurate beam tracking. Because detection of the signal strength at the preset locations is easy to implement, consumes a short time, and does not need to occupy a large quantity of antenna resources, fast beam tracking that occupies a small quantity of resources is implemented by using the beam tracking apparatus provided in this application.

According to another aspect, an embodiment of this application provides a beam tracking method. As shown in FIG. 10, the method may include the following steps.

S1001. Detect received signal strength at N preset locations in an antenna.

N is greater than 1.

It should be noted that a specific implementation of S1001 is the same as content in function description of the beam tracking apparatus 30, and details are not described herein again.

S1002. Switch a working status of the antenna according to a preset switching rule and based on a strength relationship among N detected received signal strength values, to perform beam tracking.

The preset switching rule includes a correspondence between a working status of the antenna and a strength relationship among the received signal strength values at the N preset locations.

It should be noted that a specific implementation of S1002 is the same as the content in the function description of the beam tracking apparatus 30, and details are not described herein again.

According to the beam tracking method provided in this application, the received signal strength at the N preset locations is detected, and then beam tracking is implemented according to the preset switching rule and based on the strength relationship among the N detected received signal strength values. To be specific, beam tracking is performed by using a solution provided in this application, and only the signal strength at the preset locations needs to be detected to implement accurate beam tracking. Because detection of the signal strength at the preset locations is easy to implement, consumes a short time, and does not need to occupy a large quantity of antenna resources, fast beam tracking that occupies a small quantity of resources is implemented according to the beam tracking method provided in this application.

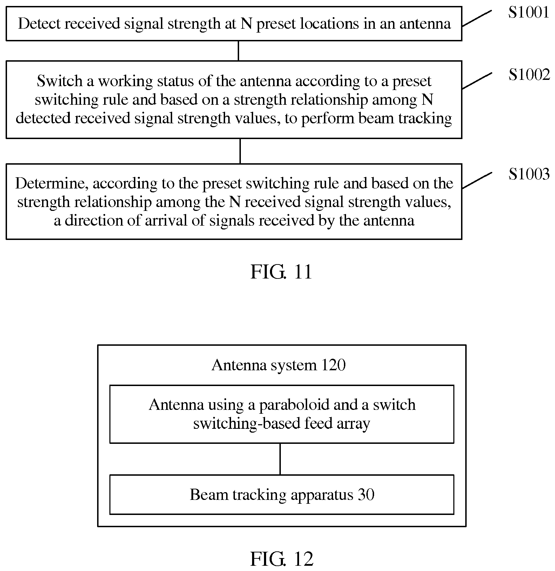

Further, as shown in FIG. 11, after S1001, the method may include the following step:

S1003. Determine, according to the preset switching rule and based on the strength relationship among the N received signal strength values, a direction of arrival of signals received by the antenna.

The preset switching rule may further include a correspondence between a direction of arrival and a strength relationship among the received signal strength values at the N preset locations.

It should be noted that a specific implementation of S1003 is the same as the content in the function description of the beam tracking apparatus 30, and details are not described herein again.

It should be further noted that an execution sequence of S1003 and S1002 may be set based on an actual requirement, and S1003 and S1002 may be simultaneously performed, or may be successively performed. When S1003 and S1002 are successively performed, a sequence of S1003 and S1002 is not specifically limited in this embodiment of this application.

It should be further noted that, according to the beam tracking method provided in this embodiment of this application, a beam tracking process may be periodically executed, may be executed at a specific time, or may be executed in an idle time slice. An execution moment of the beam tracking method is not specifically limited in this embodiment of this application. In this embodiment of this application, only a case in which the beam tracking method is performed once is described in detail, and a case in which the beam tracking method is performed a plurality of times also falls within the protection scope of this application.

Solutions provided in the embodiments of this application are mainly described above from a perspective of a working process of a beam tracking apparatus. It may be understood that, to achieve the foregoing functions, the beam tracking apparatus includes a corresponding hardware structure and/or software module for performing each function. Persons skilled in the art should easily be aware that, in combination with the examples described in the embodiments disclosed in this specification, units and algorithms steps can be implemented by hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

Method or algorithm steps described in combination with the content disclosed in this application may be implemented by hardware, or may be implemented by a processor by executing a software instruction. The software instruction may include a corresponding software module. The software module may be stored in a RAM, a flash memory, a ROM, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

According to still another aspect, an embodiment of this application provides an antenna system 120. As shown in FIG. 12, the antenna system 120 may include:
an antenna using a paraboloid and a switch switching-based feed array, and the beam tracking apparatus 30 described in any one of the foregoing embodiments.

It should be noted that, beneficial effects achieved when the antenna system 120 performs, by using the beam tracking apparatus 30, beam tracking on the antenna using a paraboloid and a switch switching-based feed array can be the same as beneficial effects achieved when the beam tracking apparatus 30 performs beam tracking on the antenna using a paraboloid and a switch switching-based feed array. Details are not described herein again.

It may be clearly understood by persons skilled in the art that, for the purpose of convenient and brief description, for a specific working process of the foregoing system, apparatus, and unit, refer to a corresponding process in the foregoing method embodiments, and details are not described herein again.

Persons skilled in the art should be aware that in the foregoing one or more examples, functions described in this application may be implemented by hardware, software, firmware, or any combination thereof. When the functions are implemented by software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer. It may be clearly understood by persons skilled in the art that, for the purpose of convenient and brief description, for a specific working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) to perform some of the steps of the methods described in the embodiments of this application. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the appended claims by which the technical solutions of the embodiments of this invention are defined.

## Claims

1. A beam tracking apparatus (30), wherein the apparatus (30) comprises N probe points (301), a detector (302) connected to the N probe points (301), and a processor (303) connected to the detector (302), and N is greater than 1, wherein
the detector (302) is configured to: detect received signal strength at N preset locations in an antenna by using the N probe points, and send N detected received signal strength values to the processor; and
the processor (303) is configured to switch a working status of the antenna according to a preset switching rule and based on a strength relationship among the N received signal strength values sent by the detector (302), to perform beam tracking, wherein the preset switching rule comprises a correspondence between a working status of the antenna and a strength relationship among the received signal strength values at the N preset locations, and the working status is a connection relationship between a channel and a feed in the antenna;
**characterized in that**
the apparatus (30) further comprises a single-pole N-throw switch (304), wherein a non-movable end of the single-pole N-throw switch is connected to the detector, and movable ends of the single-pole N-throw switch are connected to the N probe points (301); and
the detector (302) is specifically configured to: successively turn on the N probe points (301) by turning on the single-pole N-throw switch (304), and detect the received signal strength at the N preset locations in the antenna.

2. The apparatus according to claim 1, wherein the antenna comprises an antenna using a paraboloid and a switch switching-based feed array; and
the antenna using a paraboloid and a switch switching-based feed array comprises M channels, M single-pole multi-throw switches, and a feed array, the M channels are respectively connected to non-movable ends of the M single-pole multi-throw switches, movable ends of the M single-pole multi-throw switches are used to select different feed array groups in the feed array, and M is greater than 1.

3. The apparatus according to claim 1 or 2, wherein the N preset locations are N channels in the antenna.

4. The apparatus according to claim 1 or 2, wherein the N preset locations are N different locations in the feed array comprised in the antenna; and
when the feed array is distributed in a quadrilateral manner, N is 4, and the N preset locations are respectively distributed on four edges of the feed array, or the N preset locations comprise four vertices of the feed array.

5. The apparatus according to any one of claims 1 to 4, wherein the strength relationship comprises a difference or a ratio.

6. The apparatus according to any one of claims 1 to 5, wherein the processor is further configured to determine, according to the preset switching rule and based on the strength relationship among the N received signal strength values sent by the detector, a direction of arrival of signals received by the antenna using a paraboloid and a switch switching-based feed array, wherein the preset switching rule comprises a correspondence between a direction of arrival and a strength relationship among the received signal strength values.

7. A beam tracking method, comprising:
using a detector for detecting (S1001) received signal strength at N probe points located at N preset locations in an antenna, wherein N is greater than 1; and
switching (1002) a working status of the antenna according to a preset switching rule and based on a strength relationship among N detected received signal strength values, to perform beam tracking, wherein the preset switching rule comprises a correspondence between a working status of the antenna and a strength relationship among the received signal strength values at the N preset locations, and the working status is a connection relationship between a channel and a feed in the antenna;
**characterized by**
successively turning on the N probe points by turning on a single-pole N-throw switch, and detecting the received signal strength at the N preset locations in the antenna, wherein the single-pole N-throw switch has a non-movable end connected to the detector, and movable ends connected to the N probe points.

8. The method according to claim 7, wherein the antenna comprises an antenna using a paraboloid and a switch switching-based feed array; and
the antenna using a paraboloid and a switch switching-based feed array comprises M channels, M single-pole multi-throw switches, and a feed array, the M channels are respectively connected to non-movable ends of the M single-pole multi-throw switches, movable ends of the M single-pole multi-throw switches are used to select different feed array groups in the feed array, and M is greater than 1.

9. The method according to claim 7 or 8, wherein the N preset locations are N channels in the antenna.

10. The method according to claim 7 or 8, wherein the N preset locations are N different locations in the feed array comprised in the antenna; and
when the feed array is distributed in a quadrilateral manner, N is 4, and the N preset locations are respectively distributed on four edges of the feed array, or the N preset locations comprise four vertices of the feed array.

11. The method according to any one of claims 7 to 10, wherein the strength relationship comprises a difference or a ratio.

12. The method according to any one of claims 7 to 11, wherein the method further comprises:
determining (S 1003), according to the preset switching rule and based on the strength relationship among the N received signal strength values sent by the detector, a direction of arrival of signals received by the antenna using a paraboloid and a switch switching-based feed array, wherein the preset switching rule comprises a correspondence between a direction of arrival and a strength relationship among the received signal strength values.

13. An antenna system (120), wherein the antenna system (120) comprises the beam tracking apparatus (30) according to any one of claims 1 to 6.

## Patentansprüche

1. Vorrichtung zur Strahlverfolgung (30), wobei die Vorrichtung (30) N Probenpunkte (301), einen mit den N Probenpunkten (301) verbundenen Detektor (302) und einen mit dem Detektor (302) verbundenen Prozessor (303) umfasst und N größer als 1 ist, wobei
der Detektor (302) dafür ausgelegt ist, eine an N vorgegebenen Positionen in einer Antenne empfangene Signalstärke unter Verwendung der N Probenpunkte zu detektieren und N detektierte empfangene Signalstärkenwerte zu dem Prozessor zu senden; und
der Prozessor (303) dafür ausgelegt ist, einen Betriebsstatus der Antenne entsprechend einer vorgegebenen Schaltregel und basierend auf einer Stärkenbeziehung unter den N von dem Detektor (302) gesendeten empfangenen Signalstärkewerten umzuschalten, um Strahlverfolgung durchzuführen, wobei die vorgegebene Schaltregel eine Entsprechung zwischen einem Betriebsstatus der Antenne und einer Stärkenbeziehung unter den empfangenen Signalstärkewerten an den N vorgegebenen Positionen umfasst und der Betriebsstatus eine Verbindungsbeziehung zwischen einem Kanal und einer Zuleitung in der Antenne ist;
**dadurch gekennzeichnet, dass**
die Vorrichtung (30) ferner einen einpoligen N-fach-Schalter (304) umfasst, wobei ein nicht bewegliches Ende des einpoligen N-fach-Schalters mit dem Detektor verbunden ist und bewegliche Enden des einpoligen N-fach-Schalters mit den N Probenpunkten (301) verbunden sind; und
der Detektor (302) im Einzelnen dafür ausgelegt ist, die N Probenpunkte (301) mittels Drehens an dem einpoligen N-fach-Schalter (304) nacheinander einzuschalten und die empfangene Signalstärke an den N vorgegebenen Positionen in der Antenne zu detektieren.

2. Vorrichtung nach Anspruch 1, wobei die Antenne eine Antenne unter Verwendung eines Paraboloids und des Umschaltens eines schaltbasierten Zuleitungs-Arrays umfasst; und
die Antenne unter Verwendung eines Paraboloids und des Umschaltens eines schaltbasierten Zuleitungs-Arrays M Kanäle, M einpolige Mehrschalt-Schalter und ein Zuleitungs-Array umfasst, die M Kanäle jeweils mit nicht beweglichen Enden der M einpoligen Mehrschalt-Schalter verbunden sind, bewegliche Enden der M einpoligen Mehrschalt-Schalter verwendet werden, um unterschiedliche Zuleitungs-Array-Gruppen in dem Zuleitungs-Array auszuwählen und M größer als 1 ist.

3. Vorrichtung nach Anspruch 1 oder 2, wobei die N vorgegebenen Positionen N Kanäle in der Antenne sind.

4. Vorrichtung nach Anspruch 1 oder 2, wobei die N vorgegebenen Positionen N unterschiedliche Positionen in dem in der Antenne umfassten Zuleitungs-Array sind; und
wenn das Zuleitungs-Array in einer vierseitigen Weise verteilt ist, N 4 ist und die N vorgegebenen Positionen jeweils an vier Kanten des Zuleitungs-Arrays verteilt sind oder die N vorgegebenen Positionen vier Eckpunkte des Zuleitungs-Arrays umfassen.

5. Vorrichtung nach einem der Ansprüche 1 bis 4, wobei die Stärkenbeziehung eine Differenz oder ein Verhältnis umfasst.

6. Vorrichtung nach einem der Ansprüche 1 bis 5, wobei der Prozessor ferner dafür ausgelegt ist, entsprechend der vorgegebenen Schaltregel und basierend auf der Stärkenbeziehung unter den N empfangenen, von dem Detektor gesendeten Signalstärkewerten eine Richtung des Eintreffens von durch die Antenne empfangenen Signalen unter Verwendung eines Paraboloids und des Umschaltens eines schaltbasierten Zuleitungs-Arrays zu ermitteln, wobei die vorgegebene Schaltregel eine Entsprechung zwischen einer Richtung des Eintreffens und einer Stärkenbeziehung unter den empfangenen Signalstärkewerten umfasst.

7. Verfahren zur Strahlverfolgung, umfassend:
Verwenden eines Detektors zum Detektieren (S1001) empfangener Signalstärke an N Probenpunkten, positioniert an N vorgegebenen Positionen in einer Antenne, wobei N größer als 1 ist; und
Umschalten (1002) eines Betriebsstatus der Antenne entsprechend einer vorgegebenen Schaltregel und basierend auf einer Stärkenbeziehung unter N detektierten empfangenen Signalstärkewerten, um Strahlverfolgung durchzuführen, wobei die vorgegebene Schaltregel eine Entsprechung zwischen einem Betriebsstatus der Antenne und einer Stärkenbeziehung unter den empfangenen Signalstärkewerten an den N vorgegebenen Positionen umfasst und der Betriebsstatus eine Verbindungsbeziehung zwischen einem Kanal und einer Zuleitung in der Antenne ist;
**gekennzeichnet durch**
nacheinander erfolgendes Einschalten der N Probenpunkte durch Drehen eines einpoligen N-fach-Schalters und Detektieren der empfangenen Signalstärke an den N vorgegebenen Positionen in der Antenne, wobei der einpolige N-fach-Schalter ein mit dem Detektor verbundenes nicht bewegliches Ende und mit den N Probenpunkten verbundene bewegliche Enden aufweist.

8. Verfahren nach Anspruch 7, wobei die Antenne eine Antenne unter Verwendung eines Paraboloids und des Umschaltens eines schaltbasierten Zuleitungs-Arrays umfasst; und
die Antenne unter Verwendung eines Paraboloids und des Umschaltens eines schaltbasierten Zuleitungs-Arrays M Kanäle, M einpolige Mehrschalt-Schalter und ein Zuleitungs-Array umfasst, die M Kanäle jeweils mit nicht beweglichen Enden der M einpoligen Mehrschalt-Schalter verbunden sind, bewegliche Enden der M einpoligen Mehrschalt-Schalter verwendet werden, um unterschiedliche Zuleitungs-Array-Gruppen in dem Zuleitungs-Array auszuwählen und M größer als 1 ist.

9. Verfahren nach Anspruch 7 oder 8, wobei die N vorgegebenen Positionen N Kanäle in der Antenne sind.

10. Verfahren nach Anspruch 7 oder 8, wobei die N vorgegebenen Positionen N unterschiedliche Positionen in dem in der Antenne umfassten Zuleitungs-Array sind; und
wenn das Zuleitungs-Array in einer vierseitigen Weise verteilt ist, N 4 ist und die N vorgegebenen Positionen jeweils an vier Kanten des Zuleitungs-Arrays verteilt sind oder die N vorgegebenen Positionen vier Eckpunkte des Zuleitungs-Arrays umfassen.

11. Verfahren nach einem der Ansprüche 7 bis 10, wobei die Stärkenbeziehung eine Differenz oder ein Verhältnis umfasst.

12. Verfahren nach einem der Ansprüche 7 bis 11, wobei das Verfahren ferner umfasst:
Ermitteln (S1003), entsprechend der vorgegebenen Schaltregel und basierend auf der Stärkenbeziehung unter den N empfangenen, von dem Detektor gesendeten Signalstärkewerten, einer Richtung des Eintreffens von durch die Antenne empfangenen Signalen unter Verwendung eines Paraboloids und des Umschaltens eines schaltbasierten Zuleitungs-Arrays, wobei die vorgegebene Schaltregel eine Entsprechung zwischen einer Richtung des Eintreffens und einer Stärkenbeziehung unter den empfangenen Signalstärkewerten umfasst.

13. Antennensystem (120), wobei das Antennensystem (120) die Vorrichtung zur Strahlverfolgung (30) nach einem der Ansprüche 1 bis 6 umfasst.

## Revendications

1. Appareil de suivi de faisceau (30), l'appareil (30) comprenant N points de sonde (301), un détecteur (302) connecté aux N points de sonde (301), et un processeur (303) connecté au détecteur (302), et N étant supérieur à 1,
le détecteur (302) étant configuré pour : détecter l'intensité de signal reçu en N emplacements prédéfinis dans une antenne en utilisant les N points de sonde, et envoyer N valeurs d'intensité de signal reçu détectées au processeur ; et
le processeur (303) étant configuré pour commuter un état de fonctionnement de l'antenne en fonction d'une règle de commutation prédéfinie et, sur la base d'une relation d'intensité parmi les N valeurs d'intensité de signal reçu envoyées par le détecteur (302), pour réaliser un suivi de faisceau, la règle de commutation prédéfinie comprenant une correspondance entre un état de fonctionnement de l'antenne et une relation d'intensité parmi les valeurs d'intensité de signal reçu aux N emplacements prédéfinis, et l'état de fonctionnement étant une relation de connexion entre un canal et une alimentation dans l'antenne ;
**caractérisé en ce que**
l'appareil (30) comprend en outre un commutateur unipolaire à N directions (304), une extrémité non mobile du commutateur unipolaire à N directions étant connectée au détecteur, et des extrémités mobiles du commutateur unipolaire à N directions étant connectées aux N points de sonde (301) ; et
le détecteur (302) est spécifiquement configuré pour : successivement mettre sous tension les N points de sonde (301) en mettant sous tension le commutateur unipolaire à N directions (304), et détecter l'intensité de signal reçu aux N emplacements prédéfinis dans l'antenne.

2. Appareil selon la revendication 1, l'antenne comprenant une antenne utilisant un paraboloïde et un réseau d'alimentation basé sur la commutation de commutateurs ; et l'antenne utilisant un paraboloïde et un réseau d'alimentation basé sur la commutation de commutateurs comprenant M canaux, M commutateurs unipolaires multidirectionnels et un réseau d'alimentation, les M canaux étant respectivement connectés à des extrémités non mobiles des M commutateurs unipolaires multidirectionnels, des extrémités mobiles des M commutateurs unipolaires multidirectionnels étant utilisées pour sélectionner différents groupes de réseaux d'alimentation dans le réseau d'alimentation, et M étant supérieur à 1.

3. Appareil selon la revendication 1 ou 2, les N emplacements prédéfinis étant N canaux dans l'antenne.

4. Appareil selon la revendication 1 ou 2, les N emplacements prédéfinis étant N emplacements différents dans le réseau d'alimentation compris dans l'antenne ; et lorsque le réseau d'alimentation est distribué de manière quadrilatérale, N étant égal à 4, et les N emplacements prédéfinis étant respectivement répartis sur quatre bords du réseau d'alimentation, ou les N emplacements prédéfinis comprenant quatre sommets du réseau d'alimentation.

5. Appareil selon l'une quelconque des revendications 1 à 4, la relation d'intensité comprenant une différence ou un rapport.

6. Appareil selon l'une quelconque des revendications 1 à 5, le processeur étant en outre configuré pour déterminer, selon la règle de commutation prédéfinie et sur la base de la relation d'intensité parmi les N valeurs d'intensité de signal reçu envoyées par le détecteur, une direction d'arrivée de signaux reçus par l'antenne en utilisant un paraboloïde et un réseau d'alimentation basé sur la commutation de commutateurs, la règle de commutation prédéfinie comprenant une correspondance entre une direction d'arrivée et une relation d'intensité parmi les valeurs d'intensité de signal reçu.

7. Procédé de suivi de faisceau, comprenant :
l'utilisation d'un détecteur pour détecter (S1001) l'intensité de signal reçu en N points de sonde situés à N emplacements prédéfinis dans une antenne, N étant supérieur à 1 ; et
la commutation (1002) d'un état de fonctionnement de l'antenne en fonction d'une règle de commutation prédéfinie et sur la base d'une relation d'intensité parmi N valeurs d'intensité de signal reçu détectées, pour réaliser un suivi de faisceau, la règle de commutation prédéfinie comprenant une correspondance entre un état de fonctionnement de l'antenne et une relation d'intensité parmi les valeurs d'intensité de signal reçu aux N emplacements prédéfinis, et l'état de fonctionnement étant une relation de connexion entre un canal et une alimentation dans l'antenne ;
**caractérisé par**
de manière successive, la mise sous tension des N points de sonde en mettant sous tension un commutateur unipolaire à N directions, et la détection de l'intensité de signal reçu aux N emplacements prédéfinis dans l'antenne, le commutateur unipolaire à N directions ayant une extrémité non mobile connectée au détecteur, et des extrémités mobiles connectées aux N points de sonde.

8. Procédé selon la revendication 7, l'antenne comprenant une antenne utilisant un paraboloïde et un réseau d'alimentation basé sur la commutation de commutateurs ; et l'antenne utilisant un paraboloïde et un réseau d'alimentation basé sur la commutation de commutateurs comprenant M canaux, M commutateurs unipolaires multidirectionnels et un réseau d'alimentation, les M canaux étant respectivement connectés à des extrémités non mobiles des M commutateurs unipolaires multidirectionnels, des extrémités mobiles des M commutateurs unipolaires multidirectionnels étant utilisées pour sélectionner différents groupes de réseaux d'alimentation dans le réseau d'alimentation et M étant supérieur à 1.

9. Procédé selon la revendication 7 ou 8, les N emplacements prédéfinis étant N canaux dans l'antenne.

10. Procédé selon la revendication 7 ou 8, les N emplacements prédéfinis étant N emplacements différents dans le réseau d'alimentation compris dans l'antenne ; et lorsque le réseau d'alimentation est distribué de manière quadrilatérale, N étant égal à 4, et les N emplacements prédéfinis étant respectivement répartis sur quatre bords du réseau d'alimentation, ou les N emplacements prédéfinis comprenant quatre sommets du réseau d'alimentation.

11. Procédé selon l'une quelconque des revendications 7 à 10, la relation d'intensité comprenant une différence ou un rapport.

12. Procédé selon l'une quelconque des revendications 7 à 11, le procédé comprenant en outre :
la détermination (S 1003), selon la règle de commutation prédéfinie et sur la base de la relation d'intensité parmi les N valeurs d'intensité de signal reçu envoyées par le détecteur, d'une direction d'arrivée de signaux reçus par l'antenne en utilisant un paraboloïde et un réseau d'alimentation basé sur la commutation de commutateurs, la règle de commutation prédéfinie comprenant une correspondance entre une direction d'arrivée et une relation d'intensité parmi les valeurs d'intensité de signal reçu.

13. Système d'antenne (120), le système d'antenne (120) comprenant l'appareil de suivi de faisceau (30) selon l'une quelconque des revendications 1 à 6.
